# EUROPEAN PATENT SPECIFICATION

(11) **EP 3 130 478 B1**
(45) Date of publication and mention of the grant of the patent: **28.10.2020**
(21) Application number: 15777030.6
(22) Date of filing: 10.04.2015
(51) Int. Cl.: B29D 30/48, B29D 30/40

(54) **PNEUMATIC TIRE**
LUFTREIFEN
BANDAGE PNEUMATIQUE

(30) Priority: 11.04.2014 JP 2014082193
(43) Date of publication of application: 15.02.2017
(73) Proprietor: Bridgestone Corporation, Tokyo 104-8340 (JP)
(72) Inventor: NAKAMURA Masaaki, Tokyo 104-8340 (JP)
(74) Representative: Lang, Johannes
(86) International application number: PCT/JP2015/061291
(87) International publication number: WO 2015/156405

(56) References cited:
- JP-A- H0 840 024
- JP-A- H0 924 711
- JP-A- 2001 131 306
- JP-A- 2001 277 821
- JP-A- 2002 180 330
- JP-A- 2003 193 332
- JP-A- 2003 326 923
- JP-A- 2005 081 898
- JP-A- 2010 065 347

## Description

### TECHNICAL FIELD

The present invention relates to a pneumatic tire (hereinafter, also simply referred to as a "tire"), and more particularly, to a pneumatic radial tire which uses a rubber-fiber composite useful for application for reinforcing a rubber article.

### BACKGROUND ART

### BACKGROUND ART

JP 2001277821 A (BRIDGESTONE CORP.) 10 October 2001 (2001-10-10) relates to a pneumatic radial tire, of which the rigidity of the side wall section and the operational stability are improved without spoiling the comfortableness of a car using it.

JP 2002 180330 A (UBE-NITTO KASEI CO., LTD.) 26 June 2002 (2002-06-26) relates to a stretched conjugated fiber having a conjugation type of a sheath/core structure and also a high strength, and capable of being produced industrially at a low cost and with a good productivity.

JP 2003 326923 A (BRIDGESTONE CORP.) 19 November 2003 (2003-11-19) relates to a pneumatic tire which sufficiently maintains a durability performance of the tire even by using a bead tape manufactured omitting a dip processing.

Conventionally, various studies have been made of a material such as an organic fiber or a metal material as a reinforcing material for a rubber article such as a tire, and such a material has been used. Although, among organic fibers, an organic fiber composed of a polyolefin-based resin such as a polypropylene (PP)-based resin is a fiber material which has not been used for a normal rubber article, according to the studies of the present inventor, since such an organic fiber can be fused with rubber, thereby eliminating the need for providing a step of a dipping process by an adhesive agent composition on an organic fiber which is normally needed for adhesion of the organic fiber and rubber or the need for providing a layer composed of a coating rubber having a favorable adhesive property with an adhesive layer formed by a dipping process, a layer to be placed inbetween for the purpose of securing the adhesive property can be omitted. Accordingly, a reinforcing material composed of a polyolefin-based resin is particularly suitable for a demand of realizing a thin gauge for saving resources for a tire. Herein, that a fiber resin which melts at its melting point or higher by heating is stuck to rubber by interaction at the interface is referred to as fusion.

However, when a rubber article is manufactured, a vulcanization process in which rubber is sulfur crosslinked and a reinforcing material is bonded is needed; and in order to cause a sulfur crosslinking reaction, a heat treatment at a temperature of 140°C or higher is normally needed. Industrially, vulcanization is generally performed at a temperature of 165 to 190°C in order to curb processing cost by reducing time for a vulcanize reaction. Since a PP-based resin has a relatively low melting point, when a PP-based resin cord is used for reinforcing a rubber article, it is envisioned that a fiber material for reinforcement becomes a molten body which is melt in the rubber article by heating during vulcanization. For this reason, practically, application of a PP-based resin to a rubber article has hardly ever been studied.

Various studies have been made about using a so-called core/sheath fiber having a cross sectional structure composed of a core portion at the center and a sheath portion which covers the outer circumference of the core portion as one kind of organic fibers for a reinforcing member. For example, Patent Document 1 discloses a cord/rubber composite formed by embedding a cord composed of a core/sheath fiber including a core component which is a resin selected from at least one of polyester, polyamide, polyvinyl alcohol, polyacrylonitrile, rayon, and heterocycle-containing polymer and a sheath component which is a thermoplastic resin thermally fusible with rubber in unvulcanized rubber to be unified by vulcanization.

### RELATED ART DOCUMENT

### PATENT DOCUMENT

Patent Document 1: Japanese Unexamined Patent Application Publication No. H10-6406 (CLAIMS or the like)

### SUMMARY OF THE INVENTION

### PROBLEMS TO BE SOLVED BY THE INVENTION

Incidentally, one of environmental problems desired to be solved is a phenomenon in which a tire side portion vibrates to generate noises during traveling. Although vibration of a tire side portion can be suppressed by providing a reinforcing layer such as an insert member in the tire side portion to address this problem, there is a disadvantage that the thickness of the side portion is increased since a normal reinforcing layer composed of a rubberized cord layer conventionally needs a dipping process or a rubber coating.

Accordingly, an object of the present invention is to provide a pneumatic tire in which the performance is to be improved while suppressing an increase in the thickness by using a reinforcing material applicable to such an insert member or the like by which a target reinforcing performance can be attained while suppressing an increase in the thickness.

### MEANS FOR SOLVING THE PROBLEMS

As described above, conventionally, sufficient studies have not been made of application of a reinforcing material for a rubber article since a polyolefin-based resin such as a PP-based resin has a relatively low melting point. Similarly, sufficient studies have not been made of application of a resin constituting a core portion when a core/sheath fiber is used as a reinforcing material for a rubber article, and since a core/sheath fiber in which a polyolefin-based resin such as a PP-based resin is used for the core portion is assumed to melt during vulcanization of the rubber article, there is no precedent example in which such a core/sheath fiber is applied to a rubber article.

However, the present inventor actually studied to find that, even when a PP cord is industrially vulcanized under heat process conditions of a vulcanization process at a temperature of from 150°C to 200°C, particularly about 165°C to 190°C, only the cord strength of a PP cord is deteriorated to some extent within a restricted vulcanization time, and the shape or the strength of the cord is not lost due to melting of the cord in a rubber article. It is therefore considered that a core/sheath fiber in which a core portion is made of a polyolefin-based resin having a high melting point and a sheath portion is made of a polyolefin-based resin having a low melting point and which is subjected to vulcanization to attain a predetermined cord strength is useful as a reinforcing material for a rubber article, and is particularly useful as an insert member although a member to be used is not particularly restricted. From such a point of view, the present inventor further studied to find that the above-described problems can be solved by employing the following configuration, thereby completing the present invention.

That is, a tire according to claim 1 of the present invention is a pneumatic tire comprising: a pair of bead portions; a pair of side wall portions continuing from the outside of the pair of bead portions in the tire radial direction respectively; and a tread portion extending between the pair of side wall portions to form a ground-contact portion, and comprising a carcass layer composed of at least one carcass ply extending toroidally between bead cores embedded in the pair of bead portions respectively as a skeleton, wherein
a reinforcing layer using a reinforcing material composed of a core/sheath-type composite fiber (C) in which a core portion is made of a high melting point polyolefin-based resin (A) having a melting point of 150°C or higher and a sheath portion is made of a low melting point polyolefin-based resin (B) having a melting point of 80°C or higher and lower than 150°C is provided at least on the outside of the bead core in the tire radial direction.

In a tire according to the present invention, the fineness of the reinforcing material is preferably from 100 dtex to 5,000 dtex. In a tire according to the present invention, the tensile strength at break after vulcanization by rubberizing the composite fiber (C) is preferably suitably 29 N/mm² or higher. Further, in a tire according to the present invention, preferably, the reinforcing layer is provided so that the orient direction of the reinforcing material is in the range of from 30° to 90° with respect to the tire radial direction. Still further, in a tire according to the present invention, preferably, the reinforcing layer is provided between a main portion of the carcass ply extending between the pair of bead portions and a bead filler, and in a region from a tire radial direction outside end portion of the bead core to the tire maximum width position. In a tire according to the present invention, preferably, a reinforcing material composed of the composite fiber (C) is oriented in one direction and rubberized. Further, in a tire according to the present invention, the form of a fiber assembly of a reinforcing material composed of the composite fiber (C) is a monofilament, or a cord formed by bundling ten or less monofilaments.

### EFFECTS OF THE INVENTION

According to the present invention, the above-described configuration has made it possible to realize a pneumatic tire in which the performance is to be improved while suppressing an increase in the thickness by using a reinforcing material applicable to such an insert member or the like by which a target reinforcing performance can be attained while suppressing an increase in the thickness.

### BRIEF DESCRIPTION OF THE DRAWINGS

FIG. 1 is a schematic cross-sectional view illustrating one example of a pneumatic tire according to the present invention.
FIG. 2 is a schematic cross-sectional view illustrating another example of a pneumatic tire according to the present invention.
FIG. 3 is a schematic partial cross-sectional view illustrating still another example of a pneumatic tire according to the present invention.
FIG. 4 is a schematic partial cross-sectional view illustrating still another example of a pneumatic tire according to the present invention.
FIG. 5 is a schematic partial cross-sectional view illustrating still another example of a pneumatic tire according to the present invention.
FIG. 6 is a schematic partial cross-sectional view illustrating still another example of a pneumatic tire according to the present invention.
FIG. 7 is a schematic partial cross-sectional view illustrating still another example of a pneumatic tire according to the present invention.
FIG. 8 is a schematic partial cross-sectional view illustrating still another example of a pneumatic tire according to the present invention.
FIG. 9 is a schematic cross-sectional view illustrating still another example of a pneumatic tire according to the present invention.
FIG. 10 is a photograph obtained by observing a cross-section of a reinforcing material in a rubber of a composite taken out from a test tire of Example according to the present invention using a fluorescence microscope.

### MODE FOR CARRYING OUT THE INVENTION

Hereinafter, an embodiment according to the present invention will be described in detail with reference to the drawings.

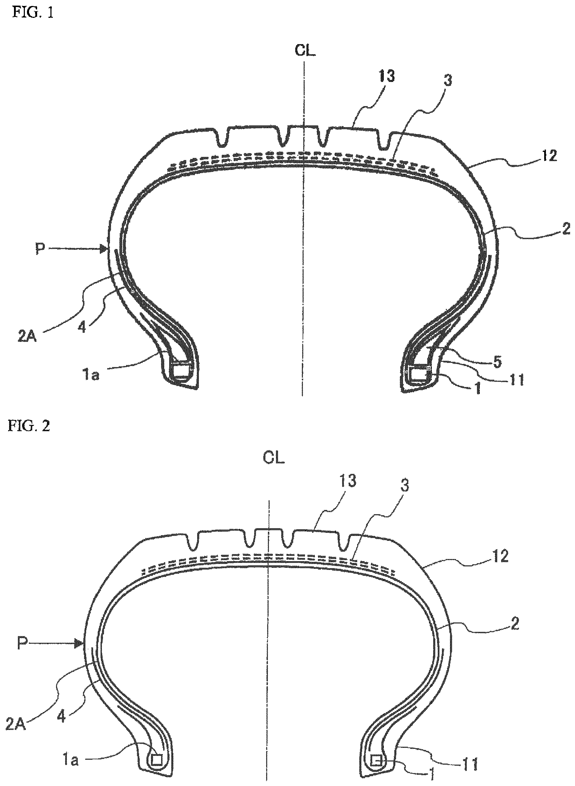

FIG. 1 is a schematic cross-sectional view illustrating one example of a pneumatic tire according to the present invention. The illustrated tire comprises: a pair of bead portions 11; a pair of side wall portions 12 continuing from the outside of the pair of bead portions 11 in the tire radial direction respectively; and a tread portion 13 extending between the pair of side wall portions 12 to form a ground-contact portion. The illustrated tire comprises a carcass layer 2 composed of at least one carcass ply extending toroidally between bead cores 1 embedded in the pair of bead portions 11 respectively as a skeleton, and comprises a belt layer 3 composed of at least two belts which are arranged on the outside of a crown portion of the skeleton in the tire radial direction. Although not illustrated, an inner liner is provided on the inside of the carcass layer 2 in the tire radial direction. The symbol 5 in the figure represents a bead filler. Examples of another preferred example of a pneumatic tire according to the present invention include a tire illustrated in FIG. 2 having a configuration in which a bead filler 5 in the FIG. 1 is not embedded.

As illustrated, a tire according to the present invention is characterized in that a reinforcing layer 4 using a reinforcing material composed of a core/sheath-type composite fiber (C) in which a core portion is made of a high melting point polyolefin-based resin (A) having a melting point of 150°C or higher and a sheath portion is made of a low melting point polyolefin-based resin (B) having a melting point of 80°C or higher and lower than 150°C is provided on the outside of the bead core 1 in the tire radial direction.

By providing the reinforcing layer 4 at least on the outside of a bead core in the tire radial direction, for example, at least a portion of a bead portion 11 and a side wall portion 12, generation of vibration at a tire side portion is suppressed, whereby generation of noises during travelling can be suppressed. In a tire during travelling, the larger the amplitude of vibration of a tire wall is, the larger an aerial vibration, i.e., a travelling noise which is generated on the surface of a tire side is. Since a vibration of the surface of a tire side, particularly a vibration in the tire circumferential direction can be suppressed due to a tensile force of a composite fiber (C) by disposing such a reinforcing layer 4, a sound generated from the surface of a tire side or the like is reduced, thereby reducing a noise such as a passing noise. Since the thickness of the reinforcing layer 4 according to the present invention is smaller than the thickness of a reinforcing layer composed of a conventional rubberized cord layer, there is no disadvantage due to an increase in the thickness of a side portion. Further, since the temperature of a tire side portion of a common tire during traveling is about 60°C, a reinforcing material according to the present invention using a polyolefin-based fiber having a relatively low melting point is applicable as a rubber member. Still further, by providing such a reinforcing layer 4, an effect of increasing a rigidity of a tire side portion and improving the drivability can also be obtained.

When a required rigidity for a tire side portion can be obtained without embedding a bead filler by providing the reinforcing layer 4 using a reinforcing material composed of the core/sheath-type composite fiber (C), a tire structure in which a bead filler is not embedded can be employed since a sufficient fatigue resistance in a tire durability travelling can be obtained.

In the present invention, the reinforcing layer 4 may be provided on the outside of the bead core 1 in the tire radial direction, by which an expected effect of reducing noises according to the present invention can be obtained by changing a displacement or a strain distribution during tire rolling with a tension born by the composite fiber (C) in the reinforcing layer 4, and an effect of improving the drivability can also be obtained. In the present invention, for example, as illustrated in FIG. 1, preferably, the reinforcing layer 4 is disposed between a main portion 2A of a carcass ply extending between a pair of bead portions 11 and the bead filler 5, and in a region from a tire radial direction outside end portion 1a of the bead core 1 to the tire maximum width position P as a so-called insert member. Provision of the reinforcing layer 4 in such a range is most effective for reducing noises during traveling.

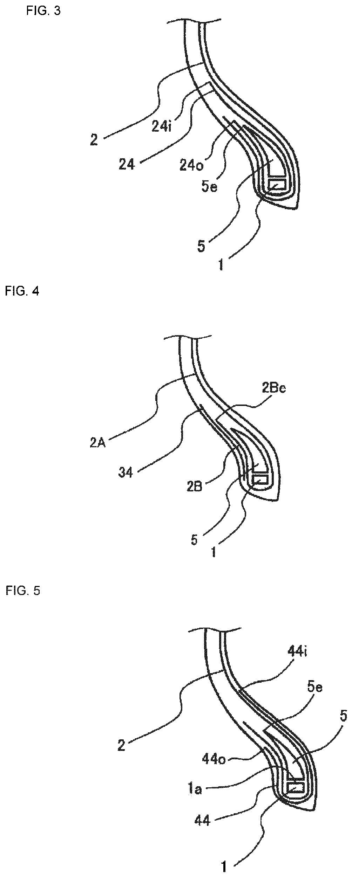

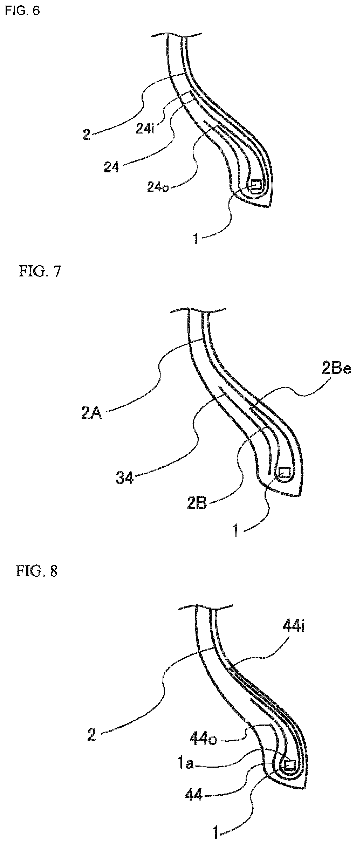

FIGs. 3 to 5 are schematic partial cross-sectional views illustrating other examples of a pneumatic tire according to the present invention. Still other examples of a pneumatic tire according to the present invention include tires illustrated in FIGs. 6 to 8 having configurations of tires in FIGs. 3 to 5 in which the bead filler 5 is not embedded.

In the present invention, as illustrated in FIG. 3, a reinforcing layer using the above-described composite fiber (C) may also be disposed between the carcass layer 2, and the bead filler 5 and bead core 1 as a so-called flipper 24. The flipper 24 can be disposed to be turned up around the bead core 1 so that both a tire width direction inside end 24i and a tire width direction outside end 24o are positioned outside a tire radial direction outside end 5e of the bead filler 5 in the tire radial direction. By providing the reinforcing layer 24 as a flipper in such a range, effects of reducing noises during traveling and improving the drivability can be obtained.

In the present invention, as illustrated in FIG. 4, a reinforcing layer can also be disposed outside a main portion 2A of a carcass ply and a turn-up portion 2B of the carcass ply which is turned up from the inside to the outside in the tire width direction around the bead core 1 and rolled up in the tire width direction so as to wrap an end portion 2Be of the turn-up portion 2B along the main portion 2A and turn-up portion 2B of the carcass ply as a so-called chipper 34. The chipper 34 can be disposed in a region from near the bead core 1 to the outside of a tire radial direction outside end 5e of the bead filler 5 in the tire radial direction. By providing the reinforcing layer 34 as a chipper in such a range, effects of reducing noises during traveling and improving the drivability can be obtained.

Further, in the present invention, as illustrated in FIG. 5, a reinforcing layer can be disposed inside the carcass layer 2 in the tire radial direction as a so-called chafer 44. The chafer 44 can be disposed to be turned up around the bead core 1 so that a tire width direction inside end 44i is positioned outside a tire radial direction outside end 5e of the bead filler 5 in the tire radial direction, and so that a tire width direction outside end 44o is positioned outside a tire radial direction outside end portion 1a of the bead core 1 in the tire radial direction and inside the tire radial direction outside end 5e of the bead filler 5 in the tire radial direction. By providing the reinforcing layer 44 as a chafer in such a range, effects of reducing noises during traveling and improving the drivability can be obtained.

In the present invention, even when a reinforcing layer using the above-described composite fiber (C) is disposed in a tire as illustrated in FIGs. 6 to 8 in which the bead filler 5 is not embedded as a flipper, a chipper, or a chafer, effects of reducing noises during traveling and improving the drivability can be obtained. This is because the static rigidity particularly in a twisting direction of a tire can be maintained high when the composite fiber (C) of a reinforcing layer of the present invention forms a crossing layer with a carcass ply even in the case of a tire in which the bead filler 5 is not embedded.

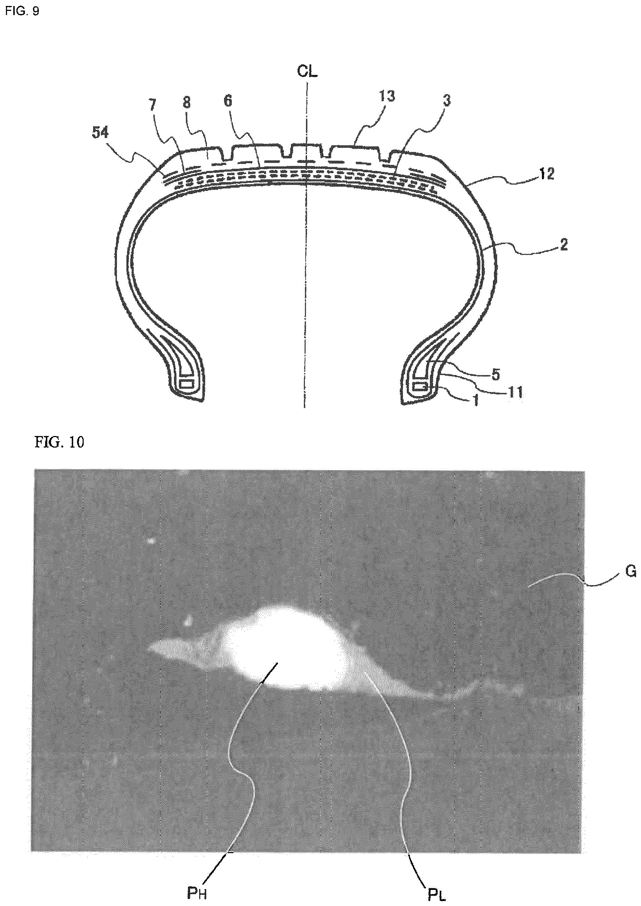

Still further, in the present invention, as illustrated in FIG. 9, a reinforcing layer can be disposed in a range of from a tread portion 13 to a side wall portion 12 as a crown portion reinforcing layer 54. In this case, at the tread portion 13, a belt layer 3, a cap layer 6 which covers the whole width of the belt layer 3, and a layered layer 7 which covers a tire width direction end portion of the belt layer 3 are disposed in the order mentioned outside a crown portion of the carcass layer 2 in the tire radial direction, and a crown portion reinforcing layer 54 is disposed outside the layered layer 7 in the tire radial direction so as to be embedded in a tread rubber 8. The crown portion reinforcing layer 54 may have a width about the same as that of the cap layer 6, and can be provided, for example, by spirally winding a strip formed by orienting a plurality of reinforcing materials composed of the above-described core/sheath-type composite fiber (C) and embedding in a rubber, substantially in the tire circumferential direction being spaced apart from each other in the tire width direction. By providing the reinforcing layer 54 as a crown portion reinforcing layer in such a range, an effect of improving the durability can be obtained.

In the present invention, the reinforcing layer 4 may be provided so that the fiber axis direction of the reinforcing material is any direction, and is preferably provided so that the orient direction of the reinforcing material is substantially in the range of from 30° to 90° with respect to the tire radial direction, and more preferably provided so that the orient direction of the reinforcing material is substantially in the range of from 45° to 90° with respect to the tire radial direction. Particularly preferably, the reinforcing layer 4 is provided so that the orient direction of the reinforcing material is substantially 90° with respect to the tire radial direction, i.e., in the tire circumferential direction. Regarding an effect of reducing noises, either the tire circumferential direction or the tire radial direction attains a high effect since a vibration of a tire side portion in the tire transverse direction can be suppressed by a tensile force of a reinforcing material; however, comparing both cases of the tire circumferential direction and the tire radial direction, a higher effect is obtained when the reinforcing layer 4 is disposed so that the orient direction of the reinforcing material is in the tire circumferential direction. This is considered to be because, for suppressing a displacement due to an increase in the space between carcass ply cords, the case of the tire circumferential direction is more effective since a carcass ply cord of a tire is provided in the tire radial direction.

Regarding improvement of the drivability, it is expected in a tire structure composed of an air film supported by a tension applied by an internal pressure when a rubber layer composed of a carcass ply toroidally extending between bead cores is filled with air that, when a displacement between carcass ply cords of a tire side portion due to a variation of irregularity in the antiplane direction of the film or buckling is suppressed and is small, the orientation of a carcass ply cord which reinforces from a bead portion to a tread portion is less disturbed. Since, when the orientation of a cord is less disturbed, a situation in which a stress is less likely to be transmitted due to disturbance of the orientation of a carcass ply cord in a process in which a steering force or the like during steering a vehicle transmits a stress from a wheel to a tire tread portion contacting a ground through a carcass ply is more improved, improvement of transmission of a stress in the inplane direction of a film related to steering such as a steering force is expected, and a drivability such as a steering responsiveness is considered to be improved. A reinforcing layer is preferably disposed in the tire circumferential direction since a displacement between carcass ply cords is particularly effectively suppressed.

A reinforcing material according to the present invention is composed of a core/sheath-type composite fiber (C) in which a core portion is made of a high melting point polyolefin-based resin (A) having a melting point of 150°C or higher and a sheath portion is made of a low melting point polyolefin-based resin (B) having a melting point of 80°C or higher and lower than 150°C. The melting point is measured by a DSC method in accordance with JIS-K-7121.

Since a sheath portion in a core/sheath-type composite fiber (C) used in the present invention is made of a low melting point polyolefin-based resin (B), the core/sheath-type composite fiber (C) advantageously achieves, at the same time, functions: that the composite fiber can be directly stuck to rubber by heat fusion when applied to enforcement of a rubber article; and that the tensile rigidity of a cord can be maintained without melting a resin of a core portion even under heating in a vulcanization process. When a reinforcing material such as a fiber composed of a polyolefin-based resin is not a composite fiber having a core/sheath structure according to the present invention or the like, for example, when a reinforcing material is a monofilament cord of a single composition, an effect of the present invention cannot be obtained.

As described above, it is difficult for a conventional monofilament cord composed of a polyolefin-based resin of a single composition to achieves, at the same time, contradictory functions: that the reinforcing material can be directly stuck to rubber by heat fusion when applied to enforcement of a rubber article; and that the tensile rigidity of a cord can be maintained without melting a resin even under heating in a vulcanization process. However, since a reinforcing material according to the present invention is composed of a core/sheath-type composite fiber (C) in which a core portion is made of a high melting point polyolefin-based resin (A) having a melting point of 150°C or higher and a sheath portion is made of a low melting point polyolefin-based resin (B) having a melting point of 80°C or higher and lower than 150°C, the reinforcing material can achieve, at the same time, functions: that the reinforcing material can be directly stuck to rubber by heat fusion with a resin of a sheath portion; and that the tensile rigidity as a reinforcing material is maintained because a resin of a core portion of a cord does not melt.

Since a reinforcing material according to the present invention is rubberized to form a rubber-fiber composite and such a rubber-fiber composite does not need a dipping process in which an adhesive agent composition such as a resorcin · formalin · latex (RFL) adhesive which is conventionally used for bonding a tire cord when complexed with a rubber be attached to the composite, an adhesion processing step can be simplified. When an organic fiber and a rubber are bonded together by using an adhesive agent composition in an application of reinforcing a tire or the like, it has usually been needed to coat the organic fiber with a rubber for coating fibers (Skim Rubber) in order to secure the adhesive strength. However, a strong sticking force between a reinforcing material of the present invention and a side rubber, a tread rubber, or the like can be directly obtained by heat fusion without mediating a rubber for coating fibers. When an organic fiber is coated with a rubber for coating fibers, it is needed to secure the thickness of coating to an extent to which a rubber coating is not broken, and therefore, the weight of rubber for the coating thickness is increased, which, in turn, generally contradicts the demand for reducing the weight of a tire contributing to improvement of the cost efficiency. However, there is no such a restriction for an adhesion processing in the present invention, and therefore, a composite with a type of rubber in accordance with a reinforcing portion such as a side tread rubber can be provided without a subsidiary negative effect such as an increase in the weight of a rubber for coating fibers.

On the other hand, although, in such a core/sheath-type composite fiber (C), a core portion is made of a high melting point polyolefin-based resin (A), the core portion does not melt even in a vulcanization process of rubber as described above. In studies of the present inventor, a core/sheath-type composite fiber (C) according to the present invention was vulcanized at 195°C which is a temperature higher than those in normal industrial vulcanizing conditions for 15 minutes, and the cross-section of a cord embedded in the vulcanized rubber was observed, and the present inventor found that, while the circular cross-section of a low melting point polyolefin-based resin (B) of a sheath portion was deformed by melting, the shape of the circular cross-section of the high melting point polyolefin-based resin (A) of the core portion was maintained after core/sheath composite spinning, and the cord did not become a completely molten body, and that the fiber breaking strength was maintained to be 150 N/mm² or higher.

As described above, the present inventor found that, when the melting point of a resin of a core portion of a cord is 150°C or higher, a rubber reinforcing material according to the present invention is obtained in which the cord did not melt nor break even when the cord was subjected to a heat treatment at 195°C during vulcanization of a rubber article. It is considered that the strength of the material of the cord is maintained and the cord has a heat resistance even at a processing temperature higher than the intrinsic melting point of a resin as described above because the melting point becomes higher than the intrinsic melting point of the resin since the cord, embedded in a rubber, is vulcanized with the length being constant, and the cord is in a condition of a constant length restriction in which a fiber does not shrink unlike in a method in accordance with JIS-K7121 or the like in which a melting point is measured without restricting the shape of a resin. It is disclosed that such a fiber may have a high melting point under a "constant length restriction" measurement condition in which the fiber does not shrink as a thermal phenomenon of a fiber material under a particular situation (2nd ed., handbook of fibres, issued on 1994, March 25, Editor: The Society of Fiber Science and Technology, Japan, Publisher: Maruzen Co., Ltd., page 207, line 13). However, findings about a resin material suitable for reinforcing a rubber article in which a polyolefin-based resin material according to the present invention and a cord material assumed to become a molten body at a resin melting point in accordance with a JIS method or higher are studied at a temperature corresponding to a rubber vulcanization process, and in which the material is directly stuck to a rubber by heat fusion, and at the same time, a resin of a core portion does not melt even under heating in a vulcanization process have never been known before.

Since the above-described core/sheath-type composite fiber (C) is composed of a core portion and a sheath portion both made of a polyolefin-based resin, a bonding force at a core/sheath polymer interface is strong unlike cases in which different types of resins are used for a core portion and a sheath portion, and a sufficient reaction force against peeling with respect to an interface peeling between a core portion /a sheath portion is attained, whereby a sufficient performance of a composite fiber can be exhibited for a long time. Further, a reinforcing material according to the present invention can be fused with a rubber without a dipping process or a rubber coating, thereby contributing to light-weightness of a tire due to a thin gauge particularly when a rubber-fiber composite according to the present invention is used for reinforcing a tire.

The high melting point polyolefin-based resin (A) used in the present invention may have a melting point of 150°C or higher, and preferably 160°C or higher. When the melting point of the high melting point polyolefin-based resin (A) is less than 150°C, a core portion of the composite fiber (C) melts and deforms to become thin during vulcanization of a rubber article, or orientations of molecules of a fiber resin deteriorate, whereby a sufficient reinforcing performance is not obtained. The lower limit of the melting point of the low melting point polyolefin-based resin (B) used in the present invention may be in a range of 80°C or higher, preferably 125°C or higher, and further preferably 130°C or higher. When the melting point of the low melting point polyolefin-based resin (B) is less than 80°C, the viscosity of a molten resin becomes too low and the thermal fluidity becomes too high during vulcanization. A portion where the thickness of a sheath portion becomes thin due to a pressure during vulcanization is generated, and a strain stress in a bonding test or the like is centered on a portion where a resin of a sheath portion is thin, whereby a break at such a portion may be likely to occur. Therefore, the melting point of the low melting point polyolefin-based resin (B) needs to be 80°C or higher. When the melting point of the low melting point polyolefin-based resin (B) is 125°C or higher, a rubber and the low melting point polyolefin-based resin are thermally fused, and at the same time, a vulcanization crosslinking reaction can be performed on a rubber composition at 130°C or higher which is a vulcanizing treatment temperature which may be industrially employed for a rubber composition to which sulfur and a vulcanization accelerator added, which is preferable. When the melting point of the low melting point polyolefin-based resin (B) is 130°C or higher, the strength of a sheath resin of the low melting point polyolefin-based resin (B) becomes high, and a fracture resistance of a resin of a sheath portion becomes high when a composite of a rubber and a sheath portion is peeled, whereby the adhesive strength of the composite of a rubber and a sheath portion becomes high, which is more preferable. In cases in which the vulcanization temperature is set to 170°C in order to industrially reduce the vulcanization time, when the upper limit of the melting point of the low melting point polyolefin-based resin (B) is less than 150°C, a compatibility with a rubber composition at an early stage of vulcanization may be attained at a vulcanization temperature of 175°C or higher which is a high temperature due to the thermal fluidity of the low melting point polyolefin-based resin (B). When the melting point of the low melting point polyolefin-based resin (B) is less than 145°C, a compatibility with a resin at an early stage of vulcanization may be attained at a common vulcanization temperature, which is preferable. The low melting point polyolefin-based resin (B) is preferably a resin having a low melting point and a resin having a high softening temperature. Since this means that the lower the melting point is, the more likely the resin is to fuse even when the processing temperature is low while the resin is less likely to soften even at a high temperature, which is a preferable feature.

Specific examples of a polyolefin-based resin which can be used as the high melting point polyolefin-based resin (A) and the low melting point polyolefin-based resin (B) include polyethylene, polypropylene, poly 1-butene, poly 3-methyl-1-butene, poly 1-pentene, poly 1-hexene, poly 4-methyl-1-pentene, poly 1-octene, poly 1-decene, poly 1-dodecene, poly 1-tetradecene, poly 1-hexadecene, poly 1-octadecene, poly 1-eicosen, polystyrene, poly *p-*methyl styrene, poly isopropyl styrene, and poly *t*-butyl styrene. Among these, crystalline polypropylene having a melting point of 150°C or higher is preferable for the high melting point polyolefin-based resin (A), and examples of the crystalline polypropylene include a propylene homopolymer, an ethylene-propylene random copolymer, and an ethylene-propylene block copolymer. A highly crystalline propylene homopolymer is particularly preferable. For the low melting point polyolefin-based resin (B), a polymer of polypropylene, polyethylene, or the like, or a mixture thereof, a polypropylene-based copolymer resin formed by copolymerization of a component copolymerizable with polypropylene and polypropylene, or the like, can be suitably used.

For a combination of the high melting point polyolefin-based resin (A) and the low melting point polyolefin-based resin (B), from the viewpoint of a favorable compatibility between a core portion and a sheath portion, it is preferable that a crystalline propylene homopolymer having a melting point of 150°C or higher is used for the high melting point polyolefin-based resin (A) of the core portion and a polypropylene-based copolymer resin formed by copolymerization of a component copolymerizable with polypropylene and polypropylene such as an ethylene-propylene copolymer or an ethylene-butene-propylene terpolymer is used for the low melting point polyolefin-based resin (B) of the sheath portion.

Examples of the form of copolymerization of comonomers in a polypropylene-based copolymer resin include a random polymer and a block copolymer, which are preferable because the adherence at an interface with a rubber is increased.

Examples of a comonomer which copolymerizes with polypropylene include α-olefin, non-conjugated diene, and a monomer which can copolymerize with another polypropylene. A monomer which is used as a comonomer is not limited one type, and a multi-component copolymer in which two or more types of monomers are used such as a terpolymer may be preferably used.

Examples of α-olefin include those in which the number of carbon atoms is 2 or 4 to 20, specifically, ethylene, 1-butene, 1-pentene, 1-hexene, 1-octene, 1-heptene, 4-methylpentene-1, 4-methyl-hexene-1, and 4,4-dimethyl pentene-1. Examples of non-conjugated diene include 5-ethylidene-2-norbornene, dicyclopentadiene, and 1,4-hexadiene. In particular, it is preferable that a non-conjugated diene is introduced into ethylene and propylene as the third component, since, when a component of ethylene-propylene-diene copolymer (EPDM) is contained, a component having adherence at an interface with a rubber to be adhered and having covulcanization due to sulfur is contained.

Examples of a process for producing a propylene-based copolymer resin include slurry polymerization, gas phase polymerization, or liquid phase bulk polymerization using an olefin polymerization catalyst such as a Ziegler catalyst or a metallocene catalyst, and as the polymerization method, any of batch polymerization and continuous polymerization may be employed.

The low melting point polyolefin-based resin (B) is a composition of a polyolefin-based resin, for example, a homopolymer such as polyethylene or polypropylene; or an ethylene-propylene random copolymer which is to be a resin composition having a melting point range defined in the present invention, and a mixed resin composition of these is known to have a structure of phase separation. In order to accelerate compatibility of an interface between phases by adding a block copolymer composed of a soft segment and a hard segment, a compatibilizer may be used. These compatibilizers preferably include a segment having adherence of an interface between a high melting point polyolefin-based resin (A) which is a core component and a low melting point polyolefin-based resin (B) which is a sheath component or an interaction with the molecule structure of a styrene · butadiene rubber (SBR), a butadiene rubber (BR), a butyl rubber (IIR), a natural rubber (IR) having a structure of polyisoprene, or the like contained in a sheath component and a rubber to be adhered since adherence to a rubber to be adhered is improved.

Examples of such a compatibilizer include a styrene-butadiene polymer, a polystyrene-poly(ethylene/propylene) block copolymer, a styrene-isoprene block polymer, and, a completely hydrogenated or partially hydrogenated polymer in which a double bond of these block copolymers of styrene and butadiene is hydrogenated. Specific examples of the styrene-butadiene polymer include a styrene-butadiene polymer (SBS), a styrene-ethylene ·butadiene copolymer (SEB), a styrene-ethylene · butadiene-styrene copolymer (SEBS), a styrene-butadiene · butylene-styrene copolymer (SBBS), and a partially hydrogenated styrene-isoprene · butadiene-styrene copolymer. Examples of the polystyrene-poly(ethylene/propylene) block polymer include a polystyrene-poly(ethylene/propylene) block copolymer (SEP), a polystyrene-poly(ethylene/propylene) block-polystyrene (SEPS), a polystyrene-poly(ethylene/butylene) block-polystyrene (SEBS), and a polystyrene-poly(ethylene-ethylene/propylene) block-polystyrene (SEEPS). Examples of the styrene-isoprene block polymer include polystyrene-polyisoprene-polystyrene copolymer (SIS).

Other than the above-described block copolymer composed of a soft segment and a hard segment, the low melting point polyolefin-based resin (B) may contain a thermoplastic rubber (TPV) which is crosslinked to a polypropylene-based copolymer, "other thermoplastic elastomers (TPZ)" in the classification of thermoplastic elastomers described in JIS K6418, or the like for the purpose of enhancing adherence of an interface with a rubber composition to be adhered. These can finely disperse a partially or highly crosslinked rubber into a continuous phase of a matrix of a thermoplastic resin composition of the low melting point polyolefin-based resin (B). Examples of the crosslinked thermoplastic rubber include acrylonitrile-butadiene rubber, natural rubber, epoxydized natural rubber, butyl rubber, and ethylene · propylene · diene rubber. Examples of the other thermoplastic elastomers (TPZ) include syndiotactic-1,2-poly butadiene resin and a *trans*-polyisoprene resin.

Further, to a polyolefin-based resin according to the present invention, an additive which is normally added to a polyolefin-based resin may be added to an extent to which an effect of the present invention or operability during spinning or the like is not significantly compromised in order to add another characteristic such as oxidation resistance. For such an additive component, a variety of conventionally known additives which are used as additives for a polyolefin resin such as a nucleating agent, an antioxidant, a neutralizer, a light stabilizer, an ultraviolet absorber, a lubricant, an antistatic agent, a filler, a metal deactivator, a peroxide, an anti-microbial fungicide, or a fluorescence whitener, or other additives can be used.

Specific example of the additive include, as a nucleating agent, sodium 2,2-methylene-bis(4,6-di-*t*-butyl phenyl) phosphate, talc, a sorbitol-based compound such as 1,3,2,4-di(*p*-methyl benzylidene)sorbitol, and hydroxy-di-*t*-butyl benzoic acid aluminum.

Examples of the antioxidant include a phenol antioxidant such as tris-(3,5-di-*t*-butyl-4-hydroxybenzyl)-isocyanurate, 1,1,3-tris(2-methyl-4-hydroxy-5-*t*-butyl phenyl)butane, octadecyl-3-(3,5-di-*t*-butyl-4-hydroxy phenyl)propionate, pentaerythrityl-tetrakis{3-(3,5-di-*t-*butyl-4-hydroxyphenyl)propionate}, 1,3,5-trimethyl-2,4,6-tris(3,5-di-*t*-butyl-4-hydroxybenzyl)benzene, 3,9-bis[2-{3-(3-*t*-butyl-4-hydroxy-5-methylphenyl)propionyloxyl-1,1-dimethylethyl]-2,4,8,10-tetraoxaspiro[5,5]undecane, and 1,3,5-tris(4-*t*-butyl-3-hydroxy-2,6-dimethylbenzyl)isocyanuric acid.

Examples of a phosphorus antioxidant include tris(mixed, mono- and di- nonyl phenyl phosphite), tris(2,4-di-*t*-butyl phenyl)phosphite, 4,4'-butylidene bis(3-methyl-6-*t*-butyl phenyl-di-tridecyl)phosphite, 1,1,3-tris(2-methyl-4-di-tridecyl phosphite-5-*t*-butyl phenyl)butane, bis(2,4-di-*t*-butyl phenyl)pentaerythritol-di-phosphite, tetrakis (2,4-di-*t*-butyl phenyl)-4,4'-biphenylenediphosphonite, tetrakis(2,4-di-*t*-butyl-5-methyl phenyl)-4,4'-biphenylenediphosphonite, and bis(2,6-di-*t*-butyl-4-methyl phenyl)pentaerythritol-diphosphite. Examples of a sulfur-based antioxidant include di-stearyl-thio-di-propionate, di-myristyl-thio-di-propionate, and pentaerythritol-tetrakis-(3-lauryl-thio-propionate).

Examples of a neutralizer include calcium stearate, stearic acid zinc, and hydrotalcite.

Examples of a hindered amine-based stabilizer include a polycondensate of dimethyl succinate and 1-(2-hydroxyethyl)-4-hydroxy-2,2,6,6-tetramethylpiperidine, tetrakis(1,2,2,6,6-pentamethyl-4-piperidyl)1,2,3,4-butane tetracarboxylate, bis(1,2,2,6,6-pentamethyl-4-piperidyl)sebacate, *N*,*N*-bis(3-aminopropyl)ethylene diamine · 2,4-bis{*N*-butyl-*N*-(1,2,2,6,6-entamethyl-4-piperidyl)amino}-6-chloro-1,3,5-triazine condensate, bis(2,2,6,6-tetramethyl-4-piperidyl)sebacate, poly[{6-(1,1,3,3-tetramethylbutyl)imino-1,3,5-triazine-2,4-diyl} {(2,2,6,6-tetramethyl-4-piperidyl)imino}hexamethylene {2,2,6,6-tetramethyl-4-piperidyl}imino], and poly[(6-morpholino-*s*-triazine-2,4-diyl)[(2,2,6,6-tetramethyl-4-piperidyl)imino]hexamethylene {(2,2,6,6-tetramethyl-4-piperidyl)imino}].

Examples of the lubricant include a higher fatty acid amide such as oleic acid amide, stearic acid amide, behenic acid amide, or ethylene bisstearoylamide; silicone oil; and a higher fatty acid ester.

Examples of the antistatic agent include a higher fatty acid glycerin ester, alkyl diethanolamine, alkyl diethanol amide, and alkyl diethanol amide fatty acid monoester.

Examples of the filler include an inorganic particulate carrier such as smectite group, vermiculite group, or mica group such as alumina, silica alumina, magnesium chloride, calcium carbonate, talc, montmorillonite, zakonite, beidellite, nontronite, saponite, hectorite, stevensite, bentonite, or taeniolite; and a porous organic carrier such as polypropylene, polyethylene, polystyrene, a styrene divinylbenzene copolymer, or acrylic acid-based copolymer. These filler can be added as a filler for reinforcing a sheath portion when a sheath portion is bonded to a rubber to be adhered, for example, in cases in which the fracture resistance of the sheath portion is not sufficient and a crack is generated in the sheath portion resulting in breakage.

Examples of the ultraviolet absorber include 2-hydroxy-4-*n*-octoxybenzophenone, 2-(2'-hydroxy-3',5'-di-*t*-butyl phenyl)-5-chloro benzotriazole, and 2-(2'-hydroxy-3'-*t*-butyl-5'-methyl phenyl)-5-chloro benzotriazole.

Examples of the light stabilizer include *n*-hexadecyl-3,5-di-*t*-butyl-4-hydroxybenzoate, 2,4-di-*t*-butylphenyl-3',5'-di-*t*-butyl-4'-hydroxybenzoate, bis(2,2,6,6-tetramethyl-4-piperidyl)sebacate, succinic acid dimethyl-2-(4-hydroxy-2,2,6,6-tetramethyl-1-piperidyl)ethanol condensate, poly{[6-[(1,1,3,3-tetramethylbutyl)amino]-1,3,5-triazine-2,4-diyl] [(2,2,6,6-tetramethyl-4-piperidyl)imino] hexamethylene [(2,2,6,6-tetramethyl-4-piperidyl)imino]}, and *N*,*N*'-bis(3-aminopropyl)ethylene diamine-2,4-bis [*N*-butyl-*N* (1,2,2,6,6-pentamethyl-4-piperidyl)amino]-6-chloro-1,3,5-triazine condensate.

In the present invention, more suitably, a polypropylene-based resin is used for both the high melting point polyolefin-based resin (A) and the low melting point polyolefin-based resin (B). For example, since a polypropylene resin has a specific gravity of 0.91, a polypropylene resin can advantageously reduce the weight of a tire for its low specific gravity. When a PP-based resin is used as the high melting point polyolefin-based resin (A) constituting a core portion, although the modulus of the PP-based resin is lower than that of a high elasticity cord such as nylon, polyester, or aramid conventionally used for a tire cord, the modulus of elasticity is between those of conventional cords and that of a rubber, whereby it is possible to provide a PP-based resin to a rubber article which receives a tension during tire manufacturing, which has not been achieved by a conventional tire cord. For example, in a rubber article such as a tire, there is a process in which a member composed of a rubber or a coated cord material is assembled, a molded unvulcanized original form such as a green tire is placed into a mold, and the molded unvulcanized original form is pressed against the mold from inside by a high temperature · high pressure steam using a rubber balloon-shaped compression apparatus called a bladder. In this process, when the modulus of a cord provided to a molded unvulcanized original form such as a green tire is too high, a cord does not extend in a portion in which the extention rate of materials become large in the pressing process by high temperature and high pressure steam, and serves as a so-called "cutting thread" (a thread or the like for cutting a lump such as clay) to sever the rubber, which makes it difficult to provide such a cord to a tire. In particular, when a cord in the tire circumferential direction is disposed on a tire side portion to be jointed in a circular shape which has no free end, a large expansion force is likely to be applied to a cord by high temperature · high pressure steam pressing, and therefore, a stretchy material such as a PP-based resin is preferable.

A polypropylene-based resin, as compared with nylon, polyester, aramid or the like which is conventionally used for a tire cord, has a property in which, in such a case that the tension is applied in the cord direction during heating in the vulcanization process in which a rubber article is munufuctured, when the tension strain in the cord direction is large, a creep occurs and the resin is more likely to be drawn, and when the tension strain in the cord direction is small, the resin thermally shrinks in the cord direction, whereby a cord slack is less likely to occur, which is preferable. Specifically, this property makes it easy to manufacture a rubber article having a designed shape since the cord itself extends or shrinks in agreement with the shape of a tire even when a provided cord slacks or shifts in molding and manufacturing a unvulcanized original form with respect to the designed shape of the rubber article which is manufactured by a mold after vulcanization, which is preferable.

Further, since a polypropylene-based resin is flexible and the crystallinity thereof is not too high, deterioration of the strength of even a monofilament cord which is assumed to relatively largely deteriorate by fatigue under a compression input is suppressed, which is advantageous.

Regarding the ratio of a core portion and a sheath portion in the composite fiber (C) in the present invention, the ratio of the core portion in the composite fiber (C) is preferably from 10 to 95% by mass. When the ratio of the core portion is too low, the strength of the composite fiber (C) may deteriorate and a sufficient reinforcing performance may not be obtained. In particular, when the ratio of the core portion is 50% by mass or higher, it is possible to improve the reinforcing performance, which is preferable. On the other hand, when the ratio of the core portion is too high, the core portion of the composite fiber (C) is likely to be exposed due to too low a ratio of the sheath portion, and a sufficient adherence to a rubber may not be obtained.

In the present invention, the melt flow index (melt flow rate, MFR) (MFR 1) of the high melting point polyolefin-based resin (A) and the melt flow index (MFR 2) of the low melting point polyolefin-based resin (B) are not particularly restricted as long as they are in a range in which spinning is possible, and are preferably from 0.3 to 100 g/ 10 min.

The melt flow index (melt flow rate, MFR) (MFR 1) of the high melting point polyolefin-based resin (A) is preferably selected from an index in the range of from 0.3 to 15 g/ 10 min, more preferably from 0.5 to 10 g/ 10 min, and particularly preferably 1 to 5 g/ 10 min. This is because, when the MFR of the high melting point polyolefin-based resin (A) is in the above-described range, favorable spinning take-up property and drawability are attained, and a molten body of the high melting point polyolefin-based resin (A) of the core portion does not flow under heating in a vulcanization process in which a rubber article is manufactured, thereby maintaining the form of the cord.

The melt flow index (MFR 2) of the low melting point polyolefin-based resin (B) is preferably 5 g /10 min or higher, more preferably 5 to 70 g /10 min, and particularly preferably 5 to 30 g/ 10 min. In order to increase the thermal fusibility of the low melting point polyolefin-based resin (B) of the sheath portion, a resin having a high MFR is preferable, since such a resin is likely to flow and fill a gap with a rubber to be adhered. On the other hand, when the MFR is too high, in cases in which there is another reinforcing member such as a ply cord or a bead core near the composite fiber (C) to be disposed, and a rubber which coats the composite fiber (C) has a gap, a molten low melting point polyolefin-based resin (B) body may wet-spread on the surface of a fiber material of a ply cord or a bead core, and therefore the MFR is particularly preferably 70 g/ 10 min or lower. When the MFR is 30 g/ 10 min or lower, the fracture resistance of a resin of a sheath portion when a rubber to be adhered is peeled becomes high, whereby the resin strongly adhere to the rubber, which is further preferable.

The value of MFR (g/10 min) is in accordance with JIS-K-7210. For the melt flow rate of a polypropylene-based resin material, a value measured at a temperature of 230°C under a load of 21.18 N (2160 g) can be used, and for the melt flow rate of a polyethylene-based resin material, a value measured at a temperature of 190°C under a load of 21.18 N (2160 g) can be used.

In the present invention, the form of a fiber assembly of a reinforcing material for the composite fiber (C) is not particularly restricted, and is preferably a monofilament or a cord formed by bundling ten or less monofilaments, and further preferably, a monofilament cord. This is because, when a fiber assembly of the composite fiber (C) in the present invention is in a fiber form of a cord formed by bundling 10 or more monofilaments, a twisted cord, a nonwoven fabric, or a textile, filaments are fused with each other since the low melting point polyolefin-based resin (B) constituting a sheath portion melts when a fiber assembly is vulcanized in a rubber, and the molten bodies permeate each other to form a bulk foreign body in a rubber article in some cases. When such a foreign body is generated, a crack develops from a bulk foreign body in the rubber article by a strain caused by rolling when a tire is used, and a separation may be caused. For this reason, when the composite fiber (C) forms a fiber assembly in a rubber article, the larger the number of filaments which can be bundled is, the less likely a rubber is to permeate between cords, and the more likely a bulk foreign body is to be formed, and therefore, usually the number of filaments to be bundled is preferably ten or less.

The composite fiber (C) is preferably provided to a tire side wall portion in a fiber form of a monofilament as a reinforcing material such as a flipper of a pneumatic tire since an effect of suppressing a displacement due to an increase in space between carcass ply cords of the tire side portion is enhanced, and drivability such as steering responsiveness is improved. This is because in the case of a reinforcing material which is crossed with a carcass ply cord of a tire side portion using a non-twisted monofilament, compared with a twisted cord composed of a plurality of filament, there is no change in the form in a fiber in which the twisted structure of a multi filament opens or closes, and therefore, a displacement when a gap between carcass ply cords increases or decreases is small.

In the present invention, the fineness, i.e., the fiber thickness of a reinforcing material is preferably in the range of from 100 dtex to 5,000 dtex. When the fiber thickness of the reinforcing material is less than 100 dtex, a cord is likely to break due to its low strength. Particularly in the case of a tire, in order to suppress a cord break during processing in a variety of processes when a tire is manufactured, the fiber thickness of a reinforcing material is more preferably 500 dtex or larger. The upper limit of the fiber thickness of a reinforcing material is not particularly defined as long as the reinforcing material can be provided to each member of a rubber article such as a tire, and is preferably 5,000 dtex or smaller, and particularly preferably 4,000 dtex or smaller. This is because, in the case of a monofilament cord, when the fiber thickness is large during spinning, cost efficiency during processing deteriorates since the spinning speed is reduced, and in addition, because the thread is hard to bend due to the large thickness of a thread when the thread is wound around a winding tool such as a bobbin, thereby deteriorating operability. The fiber thickness in the present invention means a fiber size (in accordance with JIS L 0101) measured for a single monofilament in the case of using a monofilament, and for a cord formed by bundling monofilaments in the case of using bundled monofilaments.

Further, for a coating rubber used for a rubber-fiber composite according to the present invention, a rubber type which is appropriately selected in accordance with a rubber article to be reinforced and a location to which the coating rubber is to be applied can be used, but is not particularly limited thereto. The rubber type is preferably a rubber composition containing a diene rubber including in the main chain a double bond, and particularly preferably a rubber composition further containing a sulfur-based vulcanizer. Examples of the diene rubber include natural rubber, isoprene rubber, butadiene rubber, styrene butadiene rubber, and chloroprene rubber. The diene rubber is preferably a rubber composition including a natural rubber and a butadiene rubber.

The length of a reinforcing material composed of the composite fiber (C) is suitably 10 mm or longer, and the longer the more preferable. When the length of a reinforcing material composed of the composite fiber (C) is as small as less than 10 mm, a method such as kneading with rubber and extrusion is required in the case of unification with rubber, which makes it difficult for the reinforcing material to be oriented in one direction and rubberized. The difference between a short fiber and a long fiber corresponds to the difference between an action of the end of a fiber as a free end and an action of the end of a fiber as a fixed end. Since the longer the fiber is, the better the tension-bearing ability which is a feature of a long fiber can be improved, by appropriately disposing a rubber-fiber composite, a target performance can be obtained easily in a rubber article such as a tire.

In a rubber-fiber composite according to the present invention, a reinforcing material composed of the composite fiber (C) is preferably oriented in one direction and rubberized. By orienting a reinforcing material composed of the composite fiber (C) in one direction to be used, a tension applied to a rubber can be born by a reinforcing material, and an effect of improving the cut resistance when the material is applied to an application for reinforcing a tire, an effect of dispersing a stress in a tire, or the like can be obtained. When a tension is born by a reinforcing material by taking advantage of anisotropy which is an intrinsic property of a fiber, the amount of rubber to be used can be reduced by taking advantage of the strength in the fiber axis direction, whereby an effect of improving gas mileage by a tire due to its light-weightness can be obtained.

The end count of a reinforcing material in a composite according to the present invention is preferably 0.5 to 20 per a width of 5 mm. When the end count is too small, a sufficient effect of reinforcing may not be obtained, and when the end count is too large, the interval of cords becomes small, and when the cords are in contact with each other, the low melting point polyolefin-based resin (B) of a sheath portion wet-spreads between fibers during heating and a phenomenon of fusion may be likely to occur, which is not preferable. A composite according to the present invention may be provided at one layer or more layers per one reinforcing portion as long as a problem does not occur in manufacturing a rubber article to be reinforced, and the number of layers to be provided is not particularly restricted.

As described above, a rubber-fiber composite according to the present invention can be suitably used for reinforcing a variety of rubber articles such as a tire, and can attain a target reinforcing performance while suppressing an increase in the thickness of a rubber article. In particular, when a composite according to the present invention is used for reinforcing a tire, the composite is more useful as an insert member which is used with a skeleton material for the purpose of improving drivability of a tire or the like by suppressing a vibration or a sound of a tire, improving cut resistance, or improving an effect of reducing strain during tire deformation, than as a skeleton which bears the strength of a tire by maintaining the tire internal pressure.

The tensile strength at break of a rubber-fiber composite formed by rubberizing a reinforcing material according to the present invention after vulcanization is suitably 29 N/mm² or higher, more suitably 90 N/mm² or higher, and further suitably 150 N/mm² or higher, and the higher the tensile strength at break is, the more preferable the composite is. The fiber strength of a cord dug out from a tire is suitably 1.0 cN/dtex or higher, and further suitably 1.7 cN/dtex or higher. With respect to a sheath portion of a composite fiber (C) according to the present invention, although the sheath portion is fused with a rubber and is thermally deformed at a vulcanization temperature during a process of a rubber, a core portion is hardly thermally deformed, and therefore, the composite fiber (C) is not thermally cut in the fiber axis direction. For this reason, a polyolefin-based resin portion is continuously provided along the fiber axis direction, thereby obtaining a breaking strength of 29 N/mm² or larger. By this, such a composite becomes an anisotropic material having a sufficient rubber breaking strength in the fiber axis direction, and therefore, a rubber article in which such a composite is provided can obtain a function such as bearing a strain in a particular direction. When the tensile strength at break is less than 29 N/mm², a sufficient reinforcing performance of a rubber article after vulcanization may not be obtained. Even in cases in which a rubber-fiber composite according to the present invention is provided on a desired location of a rubber article to be reinforced, and then vulcanized at a usual vulcanize temperature of from 150°C to 200°C, a sufficient reinforcing performance can be obtained. For this reason, such a composite can exhibit a sufficient reinforcing performance as a reinforcing material of a rubber article such as a tire, for example, an application for reinforcing a bead portion and a side wall portion such as an insert, a flipper, a chipper and a chafer and an application for reinforcing a tread portion such as a crown portion reinforcing layer as described above.

A tire according to the present invention can be manufactured in molding a green tire by disposing the above-described composite according to the present invention on a desired region to be reinforced among the bead portion 11, the side wall portion 12, and the tread portion 13, and then performing vulcanization at a vulcanizing temperature of from 150°C to 190°C in accordance with a conventional method for 3 to 50 minutes. Specifically, for example, when the reinforcing layer 4 is provided so that the fiber axis direction of a reinforcing material is in the tire circumferential direction in the bead portion 11 or the side wall portion 12, a composite can be provided to form a spirally wound structure in the tire radial direction. For example, when the reinforcing layer 4 is provided so that the fiber axis direction of a reinforcing material is in the tire circumferential direction in the tread portion 13, a composite can be provided to form a spirally wound structure in the tire circumferential direction.

### EXAMPLES

Hereinafter, the present invention will be described in more detail by way of Example.

### [Manufacture of Ethylene-Propylene Copolymer]

### (1) Synthesis of Precursor Mixture of Solid Catalyst

In the manufacturing of an ethylene-propylene copolymer, first, for the synthesis of a precursor of a Ti-Mg solid catalyst, the inside of a 1-liter flask equipped with a dropping funnel and a stirrer was replaced with nitrogen, then, 400 mL of hexane, 103 g of tetraethoxy silane, and 11 g of tetrabutoxy titanium were put into the flask, and the mixture was stirred at 30°C for one hour. Next, to the mixture, 250 mL of a dibutyl ether solution of butyl magnesium chloride having a concentration of 2.1 mol/L was added dropwise over three hours by using a dropping funnel while maintaining the temperature of the flask at 5°C. After completion of dropping, the mixture was stirred at 5°C for 1 hour, and then, stirred at 20°C for 1 hour, followed by filtration. The generated solid was first washed with 350 mL of toluene for three times repeatedly, and next, 300 mL of toluene was added thereto to be slurried, followed by reduced pressure drying to remove a solvent, thereby obtaining a precursor of a brown solid catalyst component.

### (2) Synthesis of Ti-Mg Solid Catalyst

The inside of a 100 mL of flask equipped with a dropping funnel and a stirrer was replaced with nitrogen, and then, 35 mL of toluene, 72 g of tetrachloro silane, and 47.5 g of di(2-ethyl hexyl) phthalate were put into the flask. 7 g of the precursor of the solid catalyst component synthesized in the (1) was fed into the flask, followed by stirring at 105°C for three hours. Thereafter, the mixture after stirring was subjected to solid-liquid separation by filtration, and the filtrated and separated solid was washed with 500 mL of toluene at 95°C for three times, followed by addition of 300 mL of toluene. Thereafter, the temperature of the mixture was elevated to 70°C, then 65 g of titanium tetrachloride was added thereto, followed by stirring at 105°C for 1 hour. Next, solid-liquid separation was performed, and the obtained solid was washed at 95°C with 500 mL of toluene for six times repeatedly. Thereafter, the mixture was washed at room temperature with 500 mL of hexane twice, and the washed solid was dried, thereby obtaining 71 g of a solid catalyst component.

### (3) Manufacture of Ethylene-Propylene Copolymer

Into a 1 liter-volume stainless autoclave equipped with a stirrer, 100 g of sodium chloride was weighed, and the pressure of the autoclave was reduced at 85°C and the autoclave was vacuum-dried. Thereafter, the inside of the autoclave was replaced with argon and stabilized at normal pressure at 60°C, and then propylene was added until 0.25 MPa, subsequently, ethylene was added so that the amount of ethylene was 40% by mass until 0.84 MPa. Thereafter, a mixture of 6 mL of pentane, 1 millimolar of triethyl aluminum, and 52.1 mg of Ti-Mg solid catalyst component prepared in the (2) was put into an argon-pressurized autoclave to start polymerization. After starting the polymerization, a mixture gas of ethylene and propylene having an amount of ethylene of 40% by mass was provided while the monomer partial pressure was adjusted to 0.84 MPa at 63°C, and stirring was continued for four hours to be polymerized. After completion of polymerization, a generated product was put out from the autoclave, 1 liter of water was added thereto, followed by stirring for 1 hour, and then filtration was performed to be vacuum-dried, thereby obtaining 30 g of an ethylene-propylene copolymer. The MFR value of the obtained ethylene-propylene copolymer at 230°C was 13 g /10 min, and the melting peak temperature (melting point) was 132°C.

### [Manufacture of Monofilament of Core/Sheath-Type Composite Fiber and Rubberize Cord]

A monofilament of a core/sheath-type composite fiber listed on Table 2 below was oriented in one direction and rubberized to manufacture a rubber-fiber composite. As the condition of the end count of the monofilament, six per a width of 5 mm was employed.

As a thermoplastic resin to be a material, resins (PP-1, PP-2, PP-3, TPE-1, TPE-2, PE-1) listed on Table 1 below which were dried using a vacuum dryer were used. Two ϕ50 mm single axis extruders for a core material and for a sheath material were used, and using a core/sheath-type composite spinning spinneret having a bore of 1.5 mm, melt spinning was performed at a discharge rate of a core component of 19.5 g/ min, at a discharge rate of a sheath component of 13.0 g/ min, and at a spinning rate of 70 m/min so that the mass ratio of the sheath/core ratio was 4:6. Thereafter, drawing was performed in a hot water bath at 98°C to attain 4.0-fold, and melt spinning was performed at a spinning temperature of the core portion of 270°C and at a spinning temperature of the sheath portion of 240°C, thereby obtaining a core/sheath-type composite monofilament having a fineness shown in table 2 below.

**[Table 1]**

| | Resin |
|---|---|
| PP-1 | propylene polymer (manufactured by Japan Polypropylene Corporation, trade name "FY6", MFR@230°C: |
| | 2.5 g/10 min, melting peak temperature (melting point): 162°C) |
| PP-2 | ethylene-propylene copolymer obtained by polymerization of the above-described (3), MFR@230°C: |
| | 14 g/10 min, melting peak temperature (melting point): 132°C |
| PP-3 | propylene polymer (manufactured by Idemitsu Kosan Co.,Ltd., trade name "L-MODU S901", MFR@230°C: |
| | 50 g/10 min, metallocene catalyst, melting peak temperature (melting point): 80°C, softening point 120°C) |
| TPE-1 | propylene-ethylene-butene random terpolymer (manufactured by Prime Polymer Co., Ltd., trade name "F794NV", ethylene content: 2.2% by mass, butene content: 6.8% by mass, MFR:7g@230°C/10 min, melting peak temperature (melting point): 130°C) |
| TPE-2 | butene-propylene copolymer (manufactured by SunAllomer Ltd., trade name "5C37F", MFR: 6g@230°C/10 min, melting peak temperature (melting point): 132°C) |
| PE-1 | low density polyethylene polymer (manufactured by Japan Polyethylene Corporation, trade name "LJ802", MFR: 22g@190°C/10 min, melting peak temperature (melting point): 106°C) |

### < Examples 1 to 7, Comparative Example 1 >

Using a tire size of 195/55R15, a pneumatic tire of Example 1 comprising: a pair of bead portions; a pair of side wall portions continuing from the outside of the pair of bead portions in the tire radial direction respectively; and a tread portion extending between the pair of side wall portions to form a ground-contact portion was manufactured. This test tire comprised a carcass layer composed of one carcass ply as a skeleton, and comprised a belt layer composed of two belts which are arranged on the outside of a crown portion of the carcass layer in the tire radial direction. As illustrated in FIG. 1, between a main portion of a carcass ply and a bead filler of the test tire, a core/sheath monofilament listed on Table 2 below was provided as a core/sheath composite fiber of the above-described rubber-fiber composite at an end count of six per a width of 5 mm in a region of the side wall portion having a width of 45 mm from a tire radial direction outside end portion of the bead core to a tire maximum width position P so that the orientation direction of the reinforcing material was substantially in the tire circumferential direction. Vulcanizing conditions in manufacturing a tire was at a vulcanization temperature of 189°C and for 11 min.

In Examples 2 to 7 and Comparative Example 1, pneumatic tires of Examples 2 to 7 and Comparative Example 1 were manufactured in a similar manner to Example 1 except that a rubber-fiber composite using a core/sheath-type composite monofilament obtained to have fineness as illustrated in Table 2 below by changing the discharge rate while keeping the sheath/core ratio 4:6 based on the mass ratio was used.

### < Example 8 >

In Example 8, a pneumatic tire of Examples 8 was manufactured in a similar manner to Example 1 except that a rubber-fiber composite using a core/sheath-type composite monofilament obtained to have fineness as illustrated in Table 2 below by changing the discharge rate while keeping the sheath/core ratio 4:6 based on the mass ratio was used and that the above-described rubber-fiber composite was provided so that the orientation direction of the reinforcing material is substantially 45° with respect to the tire radial direction.

### < Conventional Example >

A pneumatic tire of Conventional Example was manufactured in a similar manner to Example 1 except that a rubber member having the same thickness and not including a reinforcing material was disposed in place of the above-described rubber-fiber composite.

The obtained test tire in each Example was dissected to take out a rubber-fiber composite from inside, and the tensile strength at break thereof was measured. Each obtained test tire was mounted to an actual vehicle, and the vehicle was traveled on a test course to measure passing noises. These results are listed on Table 2 in combination.

With respect to a rubber attachment status of the surface of the reinforcing material which was obtained by peeling a rubber from a composite taken out from each test tire of the Examples and Comparative Example, determination of the order of ranking was performed in accordance with Table 3 below to confirm rubber attachment rate (rubberizing).

The obtained test tire was mounted to an actual vehicle, and the vehicle was traveled on a test course to evaluate the drivability by feeling evaluation of a driver. In the results, Conventional Example in which a reinforcing material was not disposed was set as a criteria (±0), and the difference from the Conventional Example was represented by a number of value having "+" or "-". The larger the number of value with "+" is, the more excellent the performance is.

**[Table 2]**

| | | Conventional Example | Comparative Example 1 | Example 1 | Example 2 | Example 3 | Example 4 | Example 5 | Example 6 | Example 7 | Example 8 |
|---|---|---|---|---|---|---|---|---|---|---|---|
| core portion polymer | Material | - | PP-1 | PP-1 | PP-1 | PP-1 | PP-1 | PP-1 | PP-1 | PP-1 | PP-1 |
| | Melting point (°C) | - | 162 | 162 | 162 | 162 | 162 | 162 | 162 | 162 | 162 |
| sheath portion polymer | Material | - | PP-1 | PP-2 | PP-3 | PE-1 | PP-2 | PP-2 | PP-2 | TPE-1 | TPE-2 |
| | Melting point (°C) | - | 162 | 132 | 80 | 106 | 132 | 132 | 132 | 130 | 132 |
| Fineness (dtex) | | - | 1040 | 1105 | 1126 | 1063 | 370 | 550 | 2950 | 1494 | 1084 |
| Density (g/cm³) | | | 0.91 | 0.89 | 0.90 | 0.88 | 0.89 | 0.89 | 0.89 | 0.91 | 0.91 |
| reinforcing condition (fiber axis direction) | | | tire circumferent ial direction | tire circumferenti al direction | tire circumferent ial direction | tire circumferent ial direction | tire circumferen tial direction | tire circumferenti al direction | tire circumferenti al direction | tire circumferenti al direction | 45° with respect to tire radial direction |
| after peeling rubber attachment rank | | - | E | B | C | B | A | A | B | A | B |
| Single fiber strength (cN/dtex) | spinning cord | - | - | 3.3 | 3.2 | 3.4 | 3.3 | 3.2 | 3.3 | 3.3 | 3.3 |
| | Dug-out cord | - | - | 2.8 | 2.7 | 2.6 | 2.8 | 2.7 | 2.8 | 2.8 | 2.8 |
| Drivability | | Criteria (±0) | -^{*1} | +2.0 | +2.0 | +1.0 | +1.0 | +2.0 | +2.0 | +2.0 | +1.0 |
| Passing noise (dB) | | 75.2 | -^{*1} | 74.6 | 74.3 | 74.4 | 74.7 | 74.1 | 74.4 | 74.5 | 74.9 |

| | | | | | | | | | | | |
|---|---|---|---|---|---|---|---|---|---|---|---|
| *1) In Comparative Example 1, since a tire was broken in a drum test, a tire test was not conducted. *2) measurement of density and fineness was performed in accordance with a chemical fiber filament yarn test method of JIS L 1013. | | | | | | | | | | | |

**[Table 3]**

| rubber attachment rate (rubber attachment) ranking | area ratio of coating rubber with respect to filament surface area |
|---|---|
| A | more than 80% to 100% |
| B | more than 60% to 80% |
| C | more than 40% to 60% |
| D | more than 20% to 40% |
| E | from 0% to 20% |

As listed on the above-described Table 2, in a test tire of each Example in which a rubber-fiber composite using a predetermined core/sheath-type composite fiber was disposed as a reinforcing material at least on a region outside in the tire radial direction from the bead core, it was confirmed that, as compared with a test tire of Conventional Example in which a reinforcing material was not disposed, noises during traveling was reduced, and at the same time, an effect of improving the drivability was obtained. The rubber attachment ranking of any of the Examples 1 to 8 was from A to C, and as compared to rubber attachment ranking E of a polypropylene polymer monofilament having a melting point of 164°C about the same high melting point as that of the core component, the adhering state was confirmed to be more favorable. As illustrated in a photograph of FIG. 10, a cross-section of a reinforcing material in a rubber of a composite taken out from the test tire of Example 1 was observed by a fluorescence microscope to find that, while the sheath portion was fluidized and deformed, the core portion did not melt.

Here, FIG. 10 is a photograph obtained by observing a cross-section of a reinforcing material in a rubber of a composite taken out from a test tire of Example using a fluorescence microscope. In FIG. 10, a circumferential region G is a vulcanized rubber of the composite, and an elliptical region P_{H} at the center of the figure is a portion of the high melting point polyolefin-based resin (A) of the core portion of the core/sheath fiber (C). A region P_{L} between the circumferential region G which is a vulcanized rubber, and an elliptical region P_{H} at the center of the figure which is a resin portion of the core portion is a molten layer of the low melting point polyolefin-based resin (B) of the sheath portion.

In this photograph, the sheath portion is the low melting point polyolefin-based resin (B) defined in the present invention, and it is found that the sheath portion is pressed against a mold from inside by a high temperature · high pressure steam in a vulcanization apparatus composed of a mold and a bladder during vulcanization to change the low melting point polyolefin-based resin (B) of the sheath portion into a molten body by heat, resulting in deformation in which a formation is deformed by a force of compression pressing a mold, and a fluidized resin wet-spreads to fill a gap between a rubber and a fiber, whereby a strong adhesion is obtained by melting.

Compared with the deformed sheath portion, the core portion maintains the elliptical form, and is the high melting point polyolefin-based resin (A) defined in the present invention, and therefore does not melt to be a molten body, and the fiber breaking strength is maintained as shown in the Example. Therefore, it is found that a function of cord rigidity needed for a reinforcing material of a rubber article is not lost.

Accordingly, by the core/sheath fiber (C) defined in the present invention, both the thermal fusibility and retention of the cord strength can be achieved under a vulcanizing condition of a rubber article, and therefore, means for suitable reinforcing a rubber article which has never been existed can be provided.

### DESCRIPTION OF SYMBOLS

- 1: bead core
- 1a: tire radial direction outside end portion of bead core
- 2: carcass layer
- 2A: main portion of carcass ply
- 2B: turn-up portion of carcass ply
- 2Be: end portion of turn-up portion of carcass ply
- 3: belt layer
- 4: reinforcing layer
- 5: bead filler
- 5e: tire radial direction outside end of bead filler
- 6: cap layer
- 7: layered layer
- 8: tread rubber
- 11: bead portion
- 12: side wall portion
- 13: tread portion
- 24: flipper
- 24i: tire width direction inside end of flipper
- 24o: tire width direction outside end of flipper
- 34: chipper
- 44: chafer
- 44i: tire width direction inside end of chafer
- 44o: tire width direction outside end of chafer
- 54: crown portion reinforcing layer
- G: vulcanized rubber of composite
- P_{H}: high melting point polyolefin-based resin of core portion
- P_{L}: low melting point polyolefin-based resin of sheath portion

## Claims

1. A pneumatic tire comprising: a pair of bead portions; a pair of side wall portions continuing from the outside of the pair of bead portions in the tire radial direction respectively; and a tread portion extending between the pair of side wall portions to form a ground-contact portion, and comprising a carcass layer composed of at least one carcass ply extending toroidally between bead cores embedded in the pair of bead portions respectively as a skeleton, wherein
a reinforcing layer using a reinforcing material composed of a core/sheath-type composite fiber (C) in which a core portion is made of a high melting point polyolefin-based resin (A) having a melting point of 150°C or higher and a sheath portion is made of a low melting point polyolefin-based resin (B) having a melting point of 80°C or higher and lower than 150°C is provided on at least the outside of the bead core in the tire radial direction,
the form of a fiber assembly of a reinforcing material composed of the composite fiber (C) is a monofilament, or a cord formed by bundling ten or less mono filaments.

2. The pneumatic tire according to claim 1, wherein the fineness of the reinforcing material is from 100 dtex to 5,000 dtex.

3. The pneumatic tire according to claim 1, wherein the tensile strength at break after vulcanization by rubberizing the composite fiber (C) is 29 N/mm² or higher.

4. The pneumatic tire according to claim 1, wherein the reinforcing layer is provided so that the orient direction of the reinforcing material is in the range of from 30° to 90° with respect to the tire radial direction.

5. The pneumatic tire according to claim 1, wherein the reinforcing layer is provided between a main portion of the carcass ply extending between the pair of bead portions and a bead filler, and in a region from a tire radial direction outside end portion of the bead core to the tire maximum width position.

6. The pneumatic tire according to claim 1, wherein a reinforcing material composed of the composite fiber (C) is oriented in one direction and rubberized.

7. The pneumatic tire according to claim 1, wherein the length of the reinforcing material composed of composite fiber (C) is 10 mm or longer.

## Patentansprüche

1. Luftreifen, umfassend: ein Paar Wulstabschnitte; ein Paar Seitenwandabschnitte, die jeweils von der Außenseite des Paars Wulstabschnitte in Reifenradialrichtung fortlaufend sind; und einen Laufflächenabschnitt, der sich zwischen dem Paar Seitenwandabschnitte erstreckt, um einen Bodenkontaktabschnitt zu bilden, und eine Karkassenschicht umfasst, die aus mindestens einer Karkassenlage besteht, die sich ringförmig zwischen Wulstkernen erstreckt, die in dem Paar Wulstabschnitte jeweils als Skelett eingebettet sind, wobei
eine Verstärkungsschicht, die ein Verstärkungsmaterial verwendet, das aus einer Kern/Mantel-Verbundfaser (C) besteht, wobei ein Kernabschnitt aus einem Harz (A) auf Polyolefinbasis mit hohem Schmelzpunkt, das einen Schmelzpunkt von 150 °C oder höher aufweist, hergestellt ist und ein Mantelabschnitt aus einem Harz (B) auf Polyolefinbasis mit niedrigem Schmelzpunkt, das einen Schmelzpunkt von 80 °C oder höher und niedriger als 150 °C aufweist, hergestellt ist, auf zumindest der Außenseite des Wulstkerns in Reifenradialrichtung bereitgestellt ist,
die Form einer Faseranordnung aus einem Verstärkungsmaterial, das aus der Verbundfaser (C) besteht, ein Monofilament oder ein Cord ist, der durch Bündeln von zehn oder weniger Monofilamenten gebildet ist.

2. Luftreifen nach Anspruch 1, wobei die Feinheit des Verstärkungsmaterials 100 dtex bis 5.000 dtex beträgt.

3. Luftreifen nach Anspruch 1, wobei die Reißfestigkeit nach der Vulkanisierung durch Gummieren der Verbundfaser (C) bei 29 N/mm² oder höher liegt.

4. Luftreifen nach Anspruch 1, wobei die Verstärkungsschicht so bereitgestellt ist, dass die Orientierungsrichtung des Verstärkungsmaterials im Bereich von 30 ° bis 90 ° in Bezug auf die Reifenradialrichtung liegt.

5. Luftreifen nach Anspruch 1, wobei die Verstärkungsschicht zwischen einem Hauptabschnitt der Karkassenlage, der sich zwischen dem Paar Wulstabschnitte erstreckt, und einem Wulstfüller und in einem Bereich von einem in Reifenradialrichtung verlaufenden Außenendabschnitt des Wulstkerns zu der Position maximaler Reifenbreite bereitgestellt ist.

6. Luftreifen nach Anspruch 1, wobei ein Verstärkungsmaterial, das aus der Verbundfaser (C) besteht, in einer Richtung orientiert und gummiert ist.

7. Luftreifen nach Anspruch 1, wobei die Länge des Verstärkungsmaterials, das aus Verbundfaser (C) besteht, bei 10 mm oder länger liegt.

## Revendications

1. Pneumatique comprenant : une paire de parties de talon ; une paire de parties de flanc se prolongeant à partir de l'extérieur de la paire de parties de talon dans la direction radiale de pneu respectivement ; et une partie de bande de roulement s'étendant entre la paire de parties de flanc pour former une partie de contact avec le sol, et comprenant une couche de carcasse composée d'au moins une nappe de carcasse s'étendant de manière toroïdale entre des tringles de talon noyées dans la paire de parties de talon respectivement en guise de squelette, dans lequel
une couche de renforcement utilisant un matériau de renforcement composé d'une fibre composite de type âme/gaine (C) dans laquelle une partie d'âme est constituée d'une résine à base de polyoléfine à point de fusion élevé (A) ayant un point de fusion de 150 °C ou plus et une partie de gaine est constituée d'une résine à base de polyoléfine à faible point de fusion (B) ayant un point de fusion de 80 °C ou plus et inférieur à 150 °C est fournie au moins sur l'extérieur de la tringle de talon dans la direction radiale de pneu,
la forme d'un ensemble de fibres d'un matériau de renforcement composé de la fibre composite (C) est un monofilament, ou un câble formé en regroupant dix monofilaments ou moins.

2. Pneumatique selon la revendication 1, dans lequel la finesse du matériau de renforcement va de 100 dtex à 5000 dtex.

3. Pneumatique selon la revendication 1, dans lequel la résistance à la traction à la rupture après vulcanisation par caoutchoutage de la fibre composite (C) est de 29 N/mm² ou plus.

4. Pneumatique selon la revendication 1, dans lequel la couche de renforcement est fournie de sorte que la direction d'orientation du matériau de renforcement est dans la plage allant de 30° à 90° par rapport à la direction radiale de pneu.

5. Pneumatique selon la revendication 1, dans lequel la couche de renforcement est fournie entre une partie principale de la nappe de carcasse s'étendant entre la paire de parties de talon et un bourrage sur tringle, et dans une région allant d'une direction radiale de pneu à l'extérieur d'une partie d'extrémité de la tringle de talon jusqu'à la position de largeur maximale de pneu.

6. Pneumatique selon la revendication 1, dans lequel un matériau de renforcement composé de la fibre composite (C) est orienté dans une direction et caoutchouté.

7. Pneumatique selon la revendication 1, dans lequel la longueur du matériau de renforcement composé de la fibre composite (C) est de 10 mm ou plus.
